# EUROPEAN PATENT APPLICATION

(11) **EP 4 664 202 A1**
(43) Date of publication of application: **17.12.2025**
(21) Application number: 24202719.1
(22) Date of filing: 25.09.2024
(51) Int. Cl.: G03G 15/00, H04N 1/00, G03G 21/16

(54) **IMAGE FORMING APPARATUS**

(30) Priority: 12.06.2024 JP 2024095117
(71) Applicant: Toshiba TEC Kabushiki Kaisha, Tokyo 141-8562 (JP)
(72) Inventor: Kikuchi, Kazuhiko, Tokyo, 141-8562 (JP)
(74) Representative: Bandpay & Greuter

(57) **Abstract**

According to one embodiment, an image forming apparatus includes a conveying unit, a tag communication unit, and a control unit. The conveying unit conveys the sheet. The tag communication unit performs a first communication with a radio tag brought close to a reading position different from the conveying unit and a second communication with the radio tag provided on the sheet being conveyed by the conveying unit. The control unit acquires setting information used in the second communication pre-associated with information that is read in the first communication and causes the tag communication unit to perform the second communication in accordance with the acquired setting information.

## Description

### FIELD

Embodiments described herein relate to an image forming apparatus.

### BACKGROUND

An image forming apparatus forms an image on a sheet to which a radio tag using a wireless communication technique such as radio frequency identification (RFID) is attached. A technique was proposed in which such an image forming apparatus includes a radio tag communication device and reads and writes data from and to a radio tag of a sheet to be processed. In such a technique, it is necessary to appropriately set the parameters of the radio tag communication device in communication with the radio tag such that data is not erroneously read or written from and to the radio tag of a sheet not to be processed. For example, it is desirable to appropriately set parameters, in accordance with the radio tag to be used. Examples of the parameters include a transmission output and a polarized-wave direction of radio waves emitted when a radio tag is detected, a threshold such as a received signal strength indicator (RSSI) used to determine the radio tag to be processed, and the like. However, in the related art, in order to set such parameters, it was necessary to perform complicated operations as follows. Sheets to be actually used are stacked on the image forming apparatus, repeated attempts were made to convey the sheets and read and write data from and to the radio tags, and optimal parameter values are specified while changing the transmission output and the polarized-wave direction of the radio waves.

### DISCLOSURE OF INVENTION

To this end, there is provided an image forming apparatus according to claim 1. Preferred embodiments are set out in the dependent claims. There is also provided an image forming system according to claim 13.

In the image forming system, the setting information may include at least one information of a transmission output and a polarized-wave direction of an antenna that the tag communication unit uses to communicate with the radio tag.

In the image forming system, the control unit may acquire the setting information associated with the radio tag communicating in the first communication, from an external device connected to a network.

In the image forming system, the information that is read in the first communication may includes type information indicating a type of the radio tag.

The image forming system may further comprise at least one sheet feeding unit.

In the image forming system, the control unit may cause a storage unit to store the setting information and information indicating the sheet feeding unit as a sheet feeding source of the sheet in association with each other, and cause the tag communication unit to perform the second communication in accordance with the setting information associated with the sheet feeding unit that feeds the sheet when the sheet is fed.

The image forming system may further comprise a selection unit that allows a user to select the sheet feeding unit that feeds the sheet, wherein the control unit associates the setting information with the sheet feeding unit selected by the selection unit.

In the image forming system, the control unit may associate the setting information with the sheet feeding unit that is most recently opened and closed.

In the image forming system, the control unit may disable use of the sheet feeding unit with which the setting information is not associated.

In the image forming system, the control unit may execute a predetermined calibration process when the setting information cannot be acquired.

In the image forming system, the control unit may execute a predetermined calibration process when the second communication, which the control unit causes the tag communication unit to perform in accordance with the setting information, fails a predetermined number of times in succession.

In the image forming system, the reading position in the first communication may be a position outside the image forming apparatus and on the rear side of the tag communication unit.

There is also provided a method of setting communication through a computer of an image forming apparatus according to claim 14, and a program comprising instructions for causing a computer of an image forming apparatus to perform the above method according to claim 15.

### DESCRIPTION OF THE DRAWINGS

FIG. 1 is an external view illustrating an example of an overall configu ration of an image forming apparatus 100 according to an embodiment;
FIG. 2 is a block diagram illustrating a hardware configuration of the image forming apparatus 100;
FIG. 3 is a diagram illustrating an internal configuration of the image forming apparatus 100;
FIG. 4 is a diagram illustrating an example of a state where a display 110 displays a menu screen;
FIG. 5 is a diagram illustrating an example of a state where the display 110 displays an instruction screen;
FIG. 6 is a diagram illustrating an example of a setting information list L stored in a server 400;
FIG. 7 is a diagram illustrating an example of a state where the display 110 displays radio tag setting information;
FIG. 8 is a diagram illustrating an example of a state where the display 110 displays a selection screen;
FIG. 9 is a flowchart illustrating a specific example of a flow of a radio tag setting process;
FIG. 10 is a flowchart illustrating a specific example of a flow of an image forming process; and
FIG. 11 is a flowchart illustrating a specific example of a flow of a calibration process.

### DETAILED DESCRIPTION

Provided is an image forming apparatus capable of more easily setting appropriate parameters in a wireless communication device that communicates with a radio tag attached to a sheet to be subjected to image formation.

In general, according to one embodiment, an image forming apparatus according to the embodiment includes a conveying unit, a tag communication unit, and a control unit. The conveying unit conveys the sheet. The tag communication unit performs a first communication with a radio tag brought close to a reading position different from the conveying unit and a second communication with the radio tag provided on the sheet being conveyed by the conveying unit. The control unit acquires setting information used in the second communication pre-associated with information that is read in the first communication and causes the tag communication unit to perform the second communication in accordance with the acquired setting information.

Hereinafter, an image forming apparatus according to an exemplary embodiment will be described with reference to the drawings.

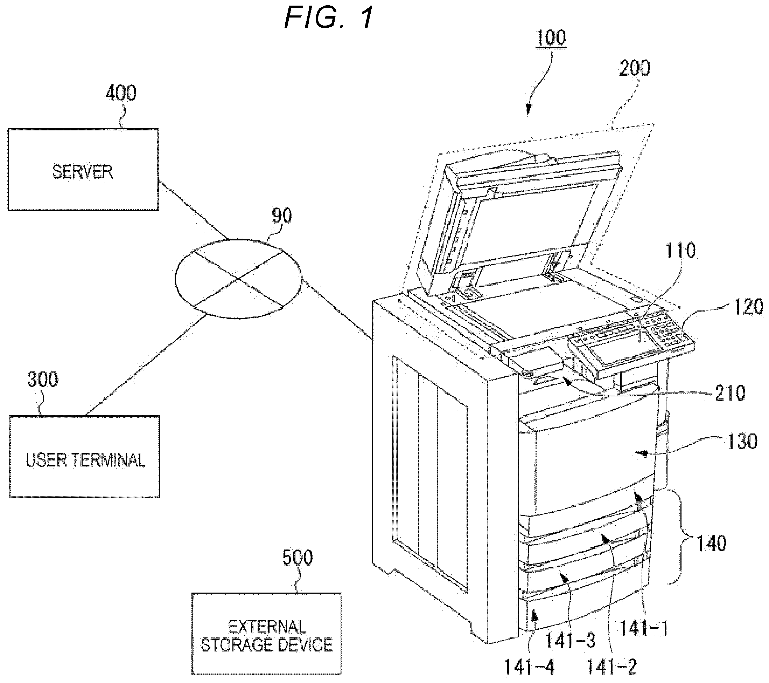

FIG. 1 is an external view illustrating an example of an overall configuration of an image forming apparatus 100 according to the embodiment. The image forming apparatus 100 is, for example, a multi-function peripheral. The image forming apparatus 100 includes a display 110, a control panel 120, a forming device 130, a sheet containing device 140, and an image reading device 200. The forming device 130 of the image forming apparatus 100 may be an electrophotographic device that fixes a toner image, an inkjet device, or another type of device.

The image forming apparatus 100 may be connected to another information processing apparatus so as to be able to communicate with the apparatus via a network 90. For example, the image forming apparatus 100 may communicate with a user terminal 300 or with a server 400 via the network 90, as illustrated in FIG. 1. The network 90 may be a network using wireless communication or a network using wired communication. The network 90 may be configured by combining a plurality of networks.

The user terminal 300 is an information processing device such as a personal computer, a smartphone, or a tablet. The user terminal 300 is operated by a user and operates in response to the operation. The user terminal 300 transmits, for example, an image formation job to the image forming apparatus 100 in response to the operation of the user. The image formation job is data that has a predetermined format to instruct the image forming apparatus 100 to form an image and write data to a radio tag. An image formation data file included in the image formation job may be configured as, for example, a so-called print data file.

The server 400 is an information processing device such as a general-purpose computer. The server 400 stores radio tag setting information in advance. The radio tag setting information is data used when parameters are set such that data can be read from and written to an appropriate radio tag (a radio tag to be processed) in the image forming apparatus 100. The radio tag setting information includes parameters used to read and write data to an appropriate radio tag. The radio tag setting information will be described in detail later.

The server 400 transmits the radio tag setting information to an apparatus that accesses a predetermined address via the network 90. For example, the server 400 may receive request information that is used to request the radio tag setting information together with type information indicating a type of radio tag from the image forming apparatus 100. In such a situation, the server 400 reads the radio tag setting information corresponding to the type information and transmits the information to the image forming apparatus 100. The type information is information for distinguishing radio tags having different communication characteristics and performance for each type. For example, the type information may be a product model number or a serial number of the radio tag.

An external storage device 500 is a storage device such as a magnetic storage device or a semiconductor storage device. The external storage device 500 is configured to be detachably provided on another information processing apparatus. For example, the external storage device 500 is configured to be detachably provided on the image forming apparatus 100. The external storage device 500 may be configured using, for example, a universal serial bus (USB) memory.

Instead of the server 400, the external storage device 500 or the user terminal 300 may be configured to store in advance the radio tag setting information to be transmitted to the image forming apparatus 100.

Next, the image forming apparatus 100 will be described.

The image forming apparatus 100 forms an image on a sheet using toner or ink. The sheet is, for example, a paper sheet or a label sheet. The sheet may be a sheet to which a radio tag is attached. The sheet may be any object having a surface on which the image forming apparatus 100 can form an image. The sheet, to which the radio tag is attached, may be a sheet having a surface on which a radio tag is attached, or a sheet into which a radio tag is embedded. The radio tag in the exemplary embodiment is a radio tag using the RFID technique, and is also called an RFID tag. Hereinafter, a sheet to which a radio tag is attached is called a "radio tag sheet."

The display 110 is an image display device such as a liquid crystal display or an organic electro luminescence (EL) display. The display 110 displays various kinds of information related to the image forming apparatus 100.

The control panel 120 has a plurality of buttons. The control panel 120 receives an operation of a user. The control panel 120 outputs a signal, which corresponds to the operation performed by the user, to a processor 153 of the image forming apparatus 100. The display 110 and the control panel 120 may be configured to be integrated into a touch panel.

The forming device 130 forms an image on a sheet, based on an image formation data file included in an image formation job received via a communication path (for example, the network 90) or an image formation data file generated by the image reading device 200. The forming device 130 forms an image through, for example, the following process. The forming device 130 forms an electrostatic latent image on a photoconductor drum, based on the image formation data file. The forming device 130 forms a visible image by depositing a developer on the electrostatic latent image. A specific example of the developer is a developer using a toner. The forming device 130 transfers the visible image onto the sheet. The forming device 130 applies heat and pressure to the sheet to fix the visible image onto the sheet. The sheet, on which the image is formed, may be a sheet stored in the sheet containing device 140 or a sheet that is manually fed. The sheet, on which the image is formed, is discharged to a sheet discharge region 210. The image formation on the sheet is not limited to the above-mentioned method using the toner. For example, the image formation on the sheet may be performed through an inkjet method.

The sheet containing device 140 contains sheets used for image formation in the forming device 130. The sheet containing device 140 is provided with a sheet feeding cassette 141. The sheet containing device 140 of one image forming apparatus 100 may be provided with one sheet feeding cassette 141 or a plurality of sheet feeding cassettes 141. In the exemplary embodiment, the sheet containing device 140 is provided with four sheet feeding cassettes 141-1 to 141-4. In the following description, when it is not necessary to distinguish between the four sheet feeding cassettes, the sheet feeding cassettes will simply be referred to as the "sheet feeding cassette 141."

The image reading device 200 reads, as a contrast of light, the image formation data file to be read. The image reading device 200 records the read information as image information. Based on the recorded image information, the forming device 130 forms an image on a sheet. The recorded image information may be transmitted to another information processing device (for example, the user terminal 300) via the network 90.

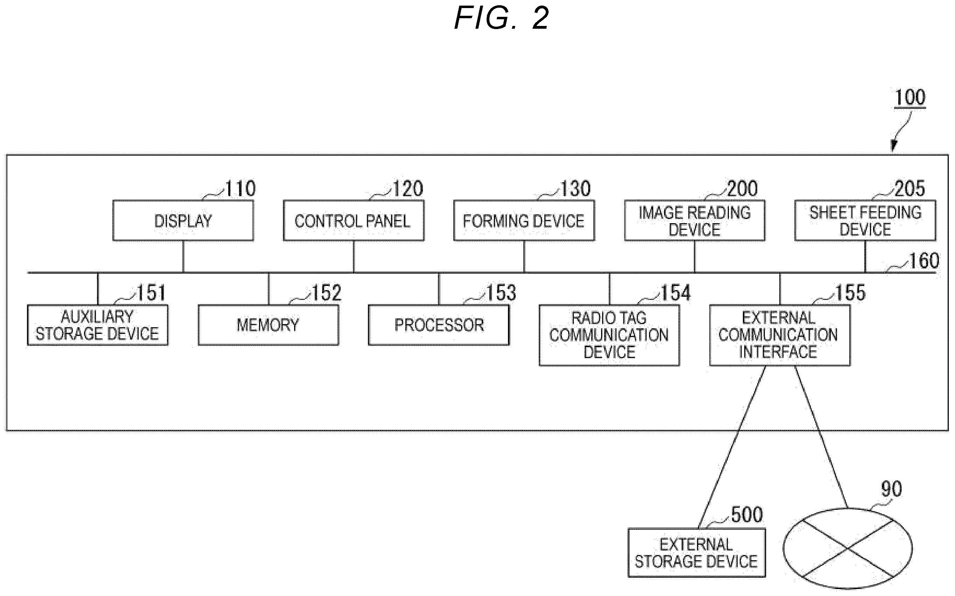

FIG. 2 is a block diagram illustrating a hardware configuration of the image forming apparatus 100 according to the embodiment. The image forming apparatus 100 includes the display 110, the control panel 120, the forming device 130, a sheet feeding device 205, an auxiliary storage device 151, a memory 152, the processor 153, a radio tag communication device 154, an external communication interface 155, and the image reading device 200. The devices are connected to one another via a system bus 160 so as to be capable of data communication. The display 110, the control panel 120, the forming device 130, and the image reading device 200 were described above, and therefore will not be described herein.

The sheet feeding device 205 is a mechanism for feeding sheets to the forming device 130, in which the sheets are placed on the sheet feeding cassette 141 and a manual feeding tray 220 to be described later. The sheet feeding cassette 141 and the manual feeding tray 220 are examples of the sheet feeding unit of the exemplary embodiment.

The auxiliary storage device 151, the memory 152, the processor 153, the radio tag communication device 154, and the external communication interface 155 will be described below.

The auxiliary storage device 151 is, for example, a hard disk or a solid state drive (SSD), and stores various kinds of data. The auxiliary storage device 151 and the memory 152 are examples of the storage unit of the exemplary embodiment. The auxiliary storage device 151 may store, for example, a software program for controlling operations of the devices provided in the image forming apparatus 100.

The memory 152 temporarily stores data used by the devices provided in the image forming apparatus 100. The memory 152 is, for example, a random access memory (RAM). The memory 152 may store digital data generated by the image reading device 200. The memory 152 may temporarily store an image formation data file being printed by the forming device 130 and writing information to be written into a radio tag.

The processor 153 controls the operations of the devices included in the image forming apparatus 100. The processor 153 is an example of a control unit of the exemplary embodiment. The processor 153 may load the software program stored in the auxiliary storage device 151 onto the memory 152 and execute the software program to execute a process. An example of the specific process of the processor 153 will be described below.

The processor 153 receives an image formation job from an external information processing device (for example, the user terminal 300 or the server 400). Alternatively, the processor 153 acquires an image formation job from the external storage device 500 in response to an operation on the control panel 120. The processor 153 controls image formation on a sheet, based on the image formation data file included in the image formation job.

The processor 153 requests and acquires radio tag setting information suitable for the radio tag to be used, from the external information processing device (for example, the server 400). The processor 153 associates the acquired radio tag setting information with the sheet feeding cassette 141 and the manual feeding tray 220 to be described later which are the sheet feeding sources of the radio tag sheet. When feeding the radio tag sheet, the processor 153 sets parameters of the radio tag communication device 154 in accordance with the sheet feeding source.

The radio tag communication device 154 reads and writes data by performing wireless communication with the radio tag. The radio tag communication device 154 is an example of the tag communication unit of the exemplary embodiment. The radio tag communication device 154 reads and writes data in accordance with parameters based on the radio tag setting information. Such parameters include, for example, the transmission output and the polarized-wave direction of the radio signal transmitted from the radio tag communication device 154 to the radio tag, a threshold value (for example, RSSI, and the like) for determining the radio tag to be processed, and information indicating the sheet feeding cassette 141 that supplies the sheet to which the radio tag is attached (that is, information indicating any one of the sheet feeding cassettes 141-1 to 141-4), and the like.

For example, the radio tag communication device 154 includes a directional antenna. The antenna direction is basically directed toward the reading position on a conveyance path 250 along which the radio tag sheet is conveyed (that is, toward the inside of the image forming apparatus 100). Therefore, even if the radio tag communication device 154 is somewhat distant from the radio tag of the radio tag sheet being conveyed on the conveyance path 250, the radio tag communication device 154 is able to communicate with the radio tag without increasing the transmission output.

On the other hand, in order for the radio tag communication device 154 to communicate with a radio tag that is present in a direction different from the antenna direction (for example, a radio tag that is present outside the image forming apparatus 100), it is necessary to bring the radio tag close to the radio tag communication device 154. In other words, even if the radio tag is present outside the image forming apparatus 100, the radio tag communication device 154 is able to communicate with the radio tag without increasing the transmission output by bringing the radio tag close to an installation position of the radio tag communication device 154. In the following description, among the sides of the radio tag communication device 154, the side that faces the outside of the image forming apparatus 100 is referred to as the "rear side (of the radio tag communication device 154)".

The external communication interface 155 performs data communication with an external device (a device different from the image forming apparatus 100). The external communication interface 155 may be configured as a communication device that performs data communication with the external device via the network 90. For example, the external communication interface 155 may be configured as a physical interface to which another device such as an external storage device 500 is detachably provided. The external communication interface 155 may communicate data with another information processing device (for example, the user terminal 300 or the server 400) via the network 90. The external communication interface 155 may be configured in accordance with, for example, a USB protocol. The external communication interface 155 transmits data, for example, under the control of the processor 153. For example, when receiving data, the external communication interface 155 outputs the received data to the processor 153.

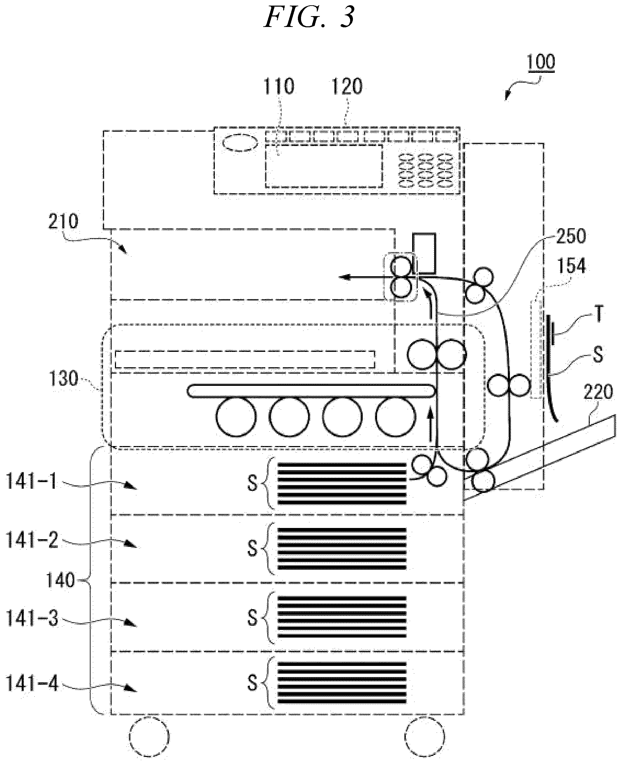

FIG. 3 is a diagram illustrating an internal configuration of the image forming apparatus 100. FIG. 3 newly illustrates the manual feeding tray 220. A radio tag sheet S is put into the conveyance path 250 from the sheet feeding cassette 141 or the manual feeding tray 220. The conveyance path 250 includes a plurality of conveyance rollers. The conveyance path 250 is an example of a conveying unit of the exemplary embodiment. The conveyance rollers rotate under the control of the processor 153 to convey the radio tag sheet S. The radio tag sheet S is conveyed along the conveyance path 250, an image is formed on the radio tag sheet S in the forming device 130, and the sheet is discharged to the sheet discharge region 210 through a sheet discharge roller. The radio tag communication device 154 communicates with the radio tag T attached to the radio tag sheet S conveyed along the conveyance path 250. The radio tag communication device 154 also communicates with the radio tag T of the radio tag sheet S which is closed by, for example, the user's hand from the outside of the image forming apparatus 100.

Hereinafter, a description will be given of a specific example of the flow of a radio tag setting process and a process of reading and writing data to the radio tag in the exemplary embodiment.

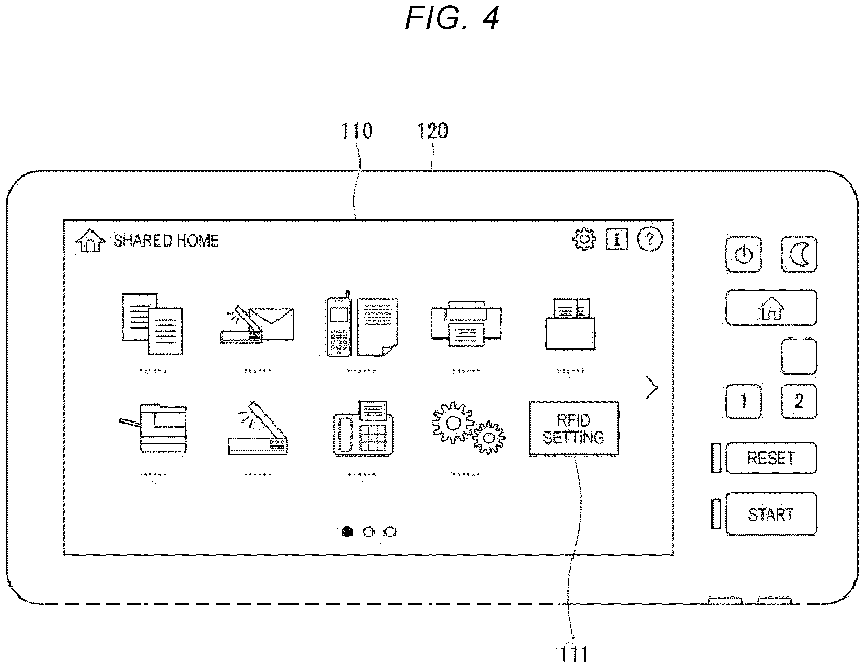

First, a user operates the control panel 120 if the radio tag T attached to the radio tag sheet S to be used is in a state where the radio tag setting (parameter setting) is not yet performed on the image forming apparatus 100 or if it is unclear whether the radio tag is set. FIG. 4 is a diagram illustrating an example of a state where the display 110 displays a menu screen. The user operates the control panel 120 to select "RFID setting" displayed on the menu screen. Specifically, for example, the user performs the selection by tapping on an image region 111, in which the "RFID setting" is displayed, in the menu screen displayed on the display 110. As a result, the display 110 displays an instruction screen. The RFID setting is an example of the radio tag setting (parameter setting), and the selection of the RFID setting corresponds to reception of a radio tag setting instruction.

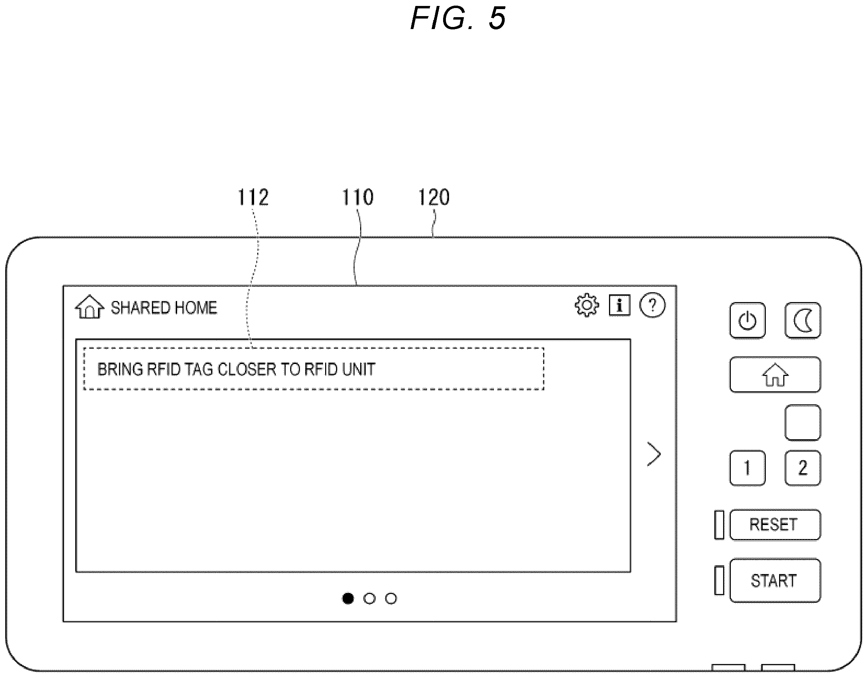

FIG. 5 is a diagram illustrating an example of a state where the display 110 displays the instruction screen. As illustrated in FIG. 5, in an image region 112 in the instruction screen, an instruction is displayed, which allows the user to bring the radio tag T, which is attached to the radio tag sheet S to be used, close to the radio tag communication device 154. The user brings the radio tag T, which is attached to the radio tag sheet S to be used, close to the reading position on the rear side of the radio tag communication device 154 in accordance with the instructions displayed on the instruction screen. As a result, communication (first communication) between the radio tag communication device 154 and the radio tag T is established.

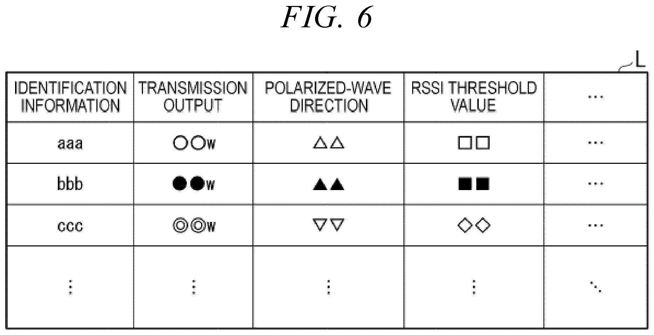

The radio tag communication device 154 reads identification information stored in the radio tag T. As described above, the identification information is information for distinguishing radio tags T with different communication characteristics and performance, such as a product model number or a serial number. The processor 153 of the image forming apparatus 100 transmits the identification information and request information, to the server 400 via the external communication interface 155. The identification information is read out by the radio tag communication device 154. The request information is for requesting radio tag setting information including parameter values to be set in the radio tag communication device 154 and the like. The server 400 stores in advance a setting information list L, which is a list of radio tag setting information predetermined for each identification information. FIG. 6 is a diagram illustrating an example of the setting information list L stored in the server 400. As illustrated in FIG. 6, the setting information list L is table-format data. In the data, the identification information is associated with the radio tag setting information (that is, a set of parameter values such as the transmission output, the polarized-wave direction, and the RSSI threshold value). However, the data format of the radio tag setting information stored in the server 400 is not limited to this. For example, the data format may be a group of files of the radio tag setting information prepared for each identification information (that is, a group of files in which the set of parameter values is described). The server 400 receives the identification information and the request information which are transmitted from the image forming apparatus 100. The server 400 returns the radio tag setting information corresponding to the received identification information to the image forming apparatus 100, with reference to the setting information list L.

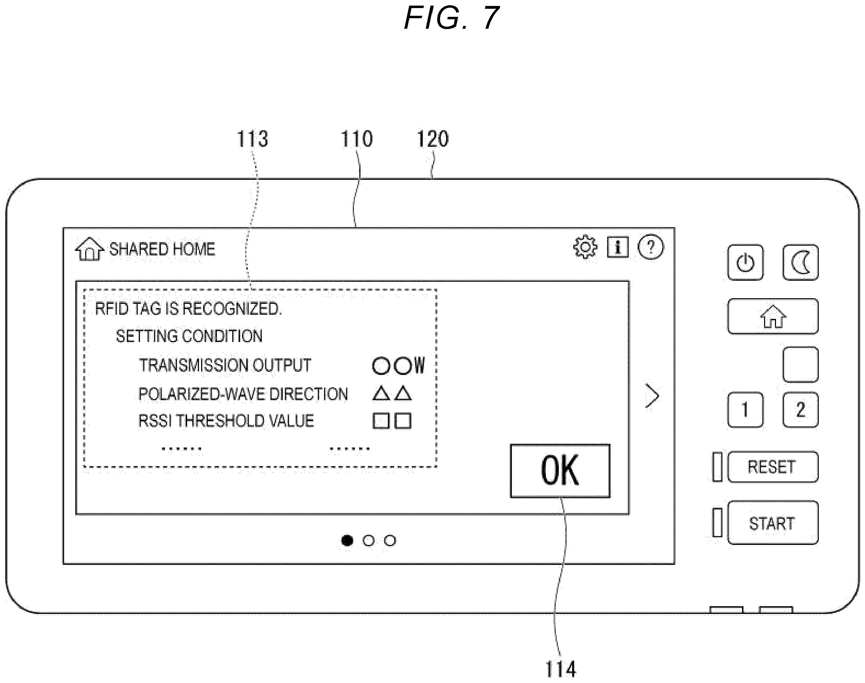

The external communication interface 155 of the image forming apparatus 100 receives the radio tag setting information transmitted from the server 400. The processor 153 causes the display 110 to display the radio tag setting information received through the external communication interface 155. FIG. 7 is a diagram illustrating an example of a state where the display 110 displays the radio tag setting information. A user is able to check the set parameter values of the radio tag setting information through display of an image region 113 on a display screen. The display screen may be configured such that the user is able to change each parameter value, as necessary.

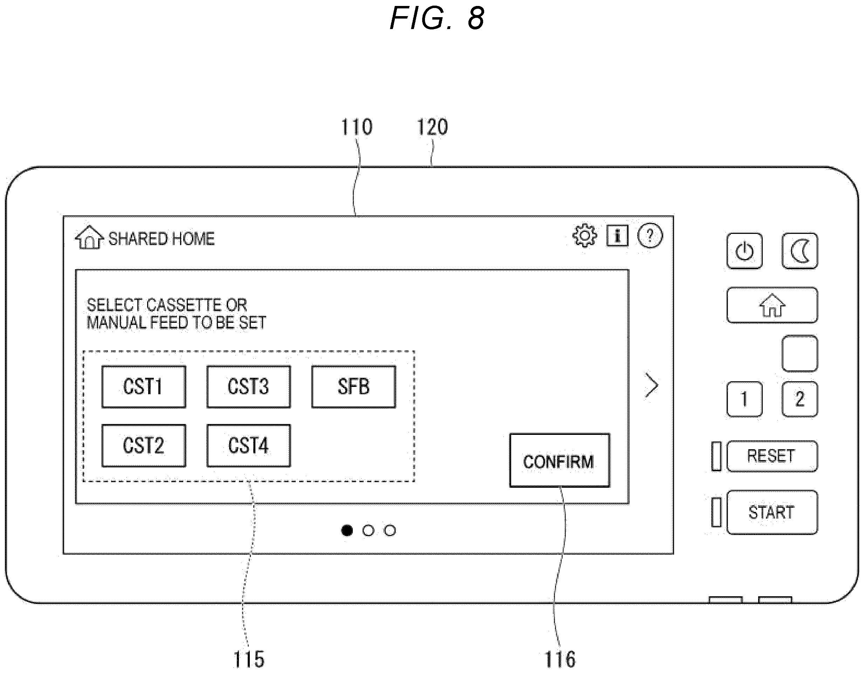

When the user checks the radio tag setting information and taps, for example, an image region 114 on the display screen displaying "OK," the processor 153 causes the display 110 to display a selection screen for the user to select one of the four sheet feeding cassettes 141 or the manual feeding tray 220. FIG. 8 is a diagram illustrating an example of a state where the display 110 displays the selection screen. The user operates the control panel 120 to select the sheet feeding cassette 141 or the manual feeding tray 220, on which the radio tag sheet S to be used is placed, on the selection screen. The control panel 120 is an example of the selection unit of the exemplary embodiment.

For example, there may be a radio tag sheet S which has a type of the radio tag same as or similar to the radio tag T brought close to the reading position on the rear side of the radio tag communication device 154. Then, the user is able to perform selection as follows. When placing the radio tag sheet S in the sheet feeding cassette 141-1, the user selects "CST1". When placing the radio tag sheet S in the sheet feeding cassette 141-2, the user selects "CST2". When placing the radio tag sheet S in the sheet feeding cassette 141-3, the user selects "CST3". When placing the radio tag sheet S in the sheet feeding cassette 141-4, the user selects "CST4". When placing the radio tag sheet S in the manual feeding tray 220, the user selects "SFB". Specifically, the user performs the selection by tapping on any of the regions displayed as "CST1" to "CST4" or "SFB" in an image region 115 of the selection screen.

The user may perform an operation to select the sheet feeding cassette 141 or the manual feeding tray 220 and may tap an image region 116 on the selection screen that displays, for example, "CONFIRM". Then, the processor 153 associates the radio tag setting information with the selected sheet feeding cassette 141 or the manual feeding tray 220, and stores the information in the auxiliary storage device 151 or the memory 152. When feeding the radio tag sheet S from the sheet feeding cassette 141 or the manual feeding tray 220, the processor 153 sets parameters in the radio tag communication device 154. The parameters are based on the radio tag setting information associated with the sheet feeding cassette 141 or the manual feeding tray 220 to be fed. Then, the radio tag communication device 154 communicates (performs second communication) with the radio tag T in accordance with the setting conditions of the set parameter values.

For example, when the user selects "CST1", the processor 153 controls the radio tag communication device 154 such that the radio tag communication device 154 transmits a signal from the antenna to the radio tag T, which is attached to the radio tag sheet S fed from the sheet feeding cassette 141-1, with a transmission output of OO W in a polarized-wave direction of ΔΔ. Then, when the RRSI threshold is equal to or greater than □□, the processor 153 controls the radio tag communication device 154 such that the radio tag communication device 154 performs writing to the radio tag.

As described above, the radio tag setting information is associated with the sheet feeding cassette 141 or the manual feeding tray 220 selected on the selection screen illustrated in FIG. 8. Instead of the above configuration, the radio tag setting information may be automatically associated with the sheet feeding cassette 141 that was last (most recently) opened and closed after the radio tag T was read from the rear side of the radio tag communication device 154. In such a case, for example, when an instruction to form an image is issued without opening or closing any of the sheet feeding cassettes 141, the radio tag setting information may be automatically associated with the manual feeding tray 220.

The processor 153 may perform control to disable the use of the sheet feeding cassette 141 or the manual feeding tray 220 to which the radio tag setting information is not associated.

Hereinafter, a description will be given of the flow of the radio tag setting process, the image forming process, and the calibration process.

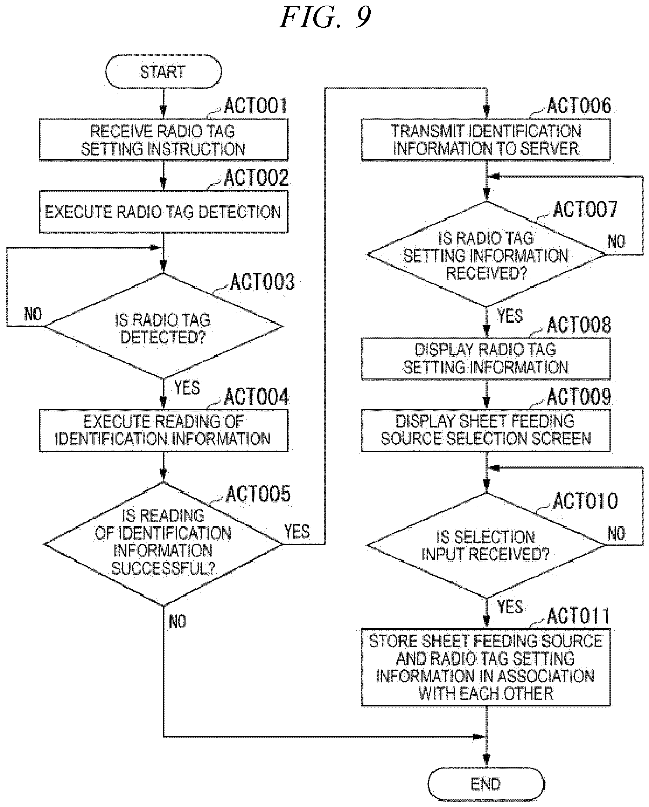

FIG. 9 is a flowchart illustrating a specific example of a flow of the radio tag setting process. The process illustrated in the flowchart in FIG. 9 is started when the radio tag setting instruction is input to the processor 153 by, for example, selecting "RFID setting" through an operation of the user on the menu screen displayed on the display 110 illustrated in FIG. 4.

The processor 153 receives the radio tag setting instruction which is output from the control panel 120 (ACT001). Next, the processor 153 causes the radio tag communication device 154 to execute the radio tag detection process (ACT002). The radio tag communication device 154 repeats the radio tag detection process until the radio tag communication device 154 detects the radio tag brought close to the rear side by the user (ACT003; NO). If a radio tag is detected (ACT003; YES), the radio tag communication device 154 executes a process of reading the identification information stored in the detected radio tag T (ACT004). If the process of reading the identification information fails (ACT005; NO), the radio tag setting process of the flowchart in FIG. 9 ends. In such a case, the processor 153 may cause the display 110 to display information indicating that the identification of the type of the radio tag fails.

If the process of reading the identification information is successful (ACT005; NO), the processor 153 transmits the read identification information and the request information for requesting the transmission of the radio tag setting information corresponding to the identification information to the server 400 via the external communication interface 155 (ACT006). Then, the processor 153 continues the standby state until the external communication interface 155 receives the radio tag setting information transmitted from the server 400 (ACT007; NO). If the external communication interface 155 receives the radio tag setting information (ACT007; YES), the processor 153 causes the display 110 to display the radio tag setting information received through the external communication interface 155 (ACT008). For example, the processor 153 causes the display 110 to display the display screen illustrated in FIG. 7.

Next, the processor 153 causes the display 110 to display the selection screen for allowing the user to select the sheet feeding cassette 141 (that is, the sheet feeding cassette 141 on which the radio tag sheet S with the above-mentioned radio tag T is placed) or the manual feeding tray 220 as the sheet feeding source (ACT009). For example, the processor 153 causes the display 110 to display the selection screen illustrated in FIG. 8. The processor 153 continues the standby state until the control panel 120 receives the selection input operation performed by the user (ACT010; NO).

When the control panel 120 receives the selection input given by the user (ACT010; YES), the processor 153 associates the radio tag setting information with the selected sheet feeding cassette 141 or the manual feeding tray 220 and stores the information in the auxiliary storage device 151 or the memory 152 (ACT011). Thereby, when the radio tag sheet S is fed from the selected sheet feeding cassette 141 or the manual feeding tray 220, the processor 153 sets the parameters of the radio tag communication device 154 in accordance with the radio tag setting information associated with the selected sheet feeding cassette 141 or the manual feeding tray 220. Then, the radio tag setting process of the flowchart in FIG. 9 ends.

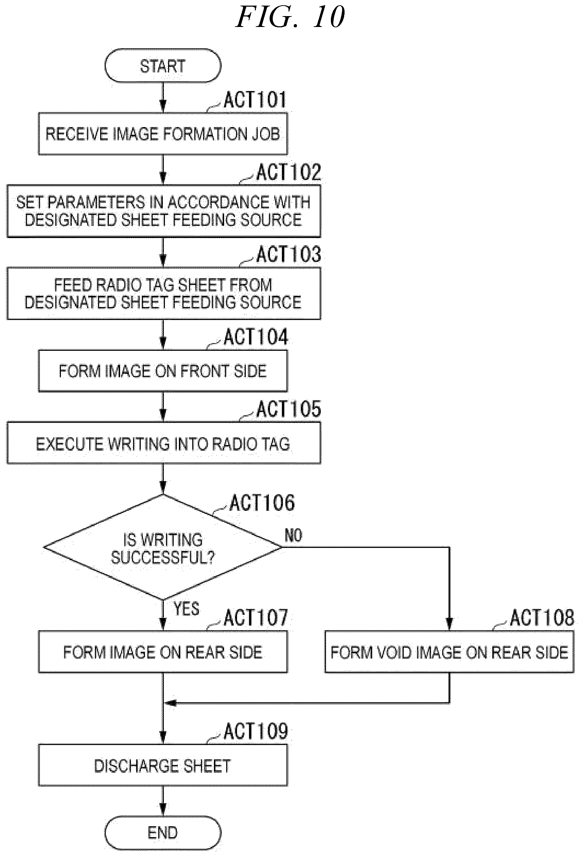

FIG. 10 is a flowchart illustrating a specific example of a flow of the image forming process. The process illustrated in the flowchart of FIG. 10 is started when an image formation job for the radio tag sheet S is input to the processor 153.

The processor 153 receives the input of the image formation job (ACT101). Specifically, the external device such as the user terminal 300 transmits the image formation job to the image forming apparatus 100 via the network 90. The processor 153 receives the input of the image formation job received through the external communication interface 155. Next, the processor 153 reads the image formation data file and writing information, which is information related to the writing process to the radio tag T, from the acquired image formation job. The writing information includes information indicating the sheet feeding cassette 141 or the manual feeding tray 220 as the sheet feeding source.

Then, the processor 153 reads the radio tag setting information, which is associated with the sheet feeding source indicated by the read writing information, from the auxiliary storage device 151 or the memory 152. The processor 153 sets parameters of the radio tag communication device 154 in accordance with the read radio tag setting information (ACT102). Next, the processor 153 controls the sheet feeding device 205 and the conveyance path 250 such that the radio tag sheet S is fed from the sheet feeding source indicated by the read writing information (ACT103).

Then, the processor 153 controls the forming device 130 such that the forming device 130 forms an image based on the image formation data file, which is read in the above process, on one side (front side) of the conveyed radio tag sheet S (ACT104). Next, the processor 153 controls the radio tag communication device 154 such that the radio tag communication device 154 executes data writing of the writing data indicated by the writing information on the radio tag T of the conveyed radio tag sheet S (ACT 105). Specifically, when the radio tag sheet S is conveyed, the radio tag communication device 154 emits electromagnetic waves for writing the writing data, from the antenna. The radio tag T attached to the radio tag sheet S receives the electromagnetic waves and writes the writing data in a storage region.

Next, the processor 153 controls the radio tag communication device 154 to check whether the data writing to the radio tag T is successful (ACT 106). Specifically, the radio tag communication device 154 emits the electromagnetic waves for reading the data written in the storage region of the radio tag T, from the antenna. The radio tag T attached to the radio tag sheet S receives the electromagnetic waves and emits electromagnetic waves including the data stored in the storage region to the radio tag communication device 154. The antenna of the radio tag communication device 154 receives the electromagnetic waves. The radio tag communication device 154 outputs the data included in the electromagnetic waves to the processor 153. The processor 153 compares the data, which is acquired from the radio tag communication device 154, with the written data. If the comparison result satisfies a predetermined condition, the processor 153 determines that the data writing to the radio tag T is successful. If the comparison result does not satisfy the predetermined condition, the processor 153 determines that the data writing to the radio tag T fails.

If it is determined that the data writing to the radio tag T is successful (ACT106; YES), the processor 153 controls the forming device 130 such that the forming device 130 forms an image based on the image formation data file, which is read in the above process, on the other side (rear side) of the conveyed radio tag sheet S (ACT 107). If it is determined that the data writing to the radio tag T fails (ACT 106; NO), the processor 153 controls the forming device 130 such that the forming device 130 forms a void image on the other side (rear side) of the conveyed radio tag sheet S (ACT108). The void image is an image indicating that an error occurs.

The processor 153 controls the conveyance path 250 such that the radio tag sheet S is discharged to the sheet discharge region 210 (ACT109). The user is able to recognize that the data writing to the radio tag T fails by checking the image formed on the rear side of the discharged radio tag sheet S. Then, the image forming process illustrated in the flowchart of FIG. 10 ends.

If the server 400 does not store the radio tag setting information corresponding to the identification information obtained by reading the radio tag T from the rear side of the radio tag communication device 154, a calibration process according to the related art may be performed. The calibration process according to the related art described herein is, for example, as follows. The radio tag sheets S to be actually used are stacked on the image forming apparatus 100. Then, each radio tag sheet S is repeatedly conveyed, and data is repeatedly read from and written to the radio tag T. Then, optimal parameter values are derived while the signal transmission output and the polarized-wave direction are changed. Hereinafter, an example of the flow of the calibration process according to the related art will be described.

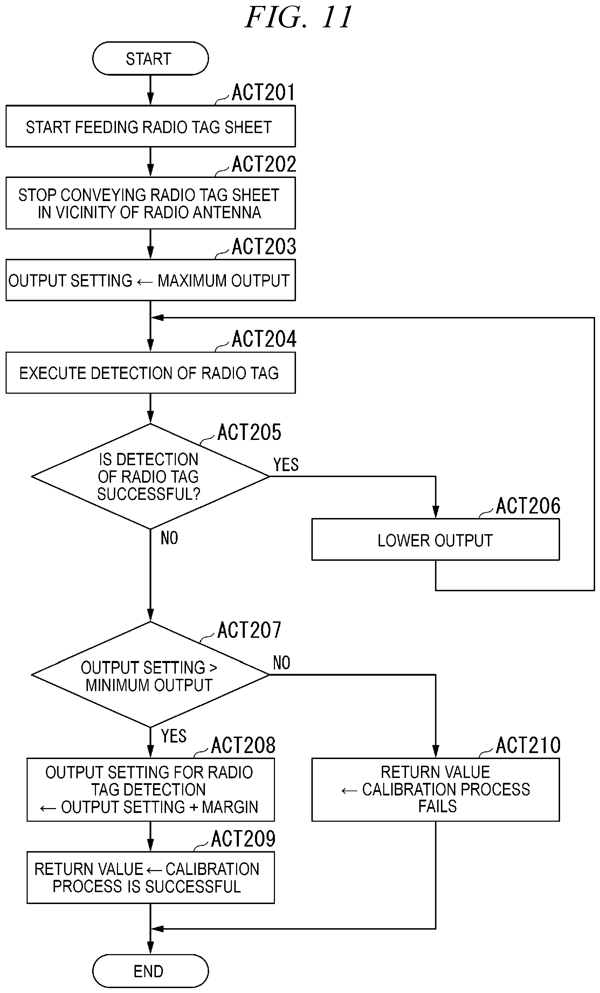

FIG. 11 is a flowchart illustrating a specific example of the flow of the calibration process. The processor 153 starts feeding the radio tag sheet S by controlling the sheet feeding device 205 corresponding to the sheet feeding cassette 141 which contains the radio tag sheet S (ACT201). The processor 153 controls rotation of the conveyance roller such that the conveyance roller conveys the radio tag sheet S to the vicinity of the antenna of the radio tag communication device 154 and stops the radio tag sheet S (ACT202). The processor 153 controls the radio tag communication device 154 such that the radio tag communication device 154 sets the maximum output of the parameters included in the calibration command, to the output of the radio tag communication device 154 (ACT203). The processor 153 causes the radio tag communication device 154 to execute a process of detecting the radio tag T (ACT204). If the detection of the radio tag T is successful in the radio tag communication device 154 (ACT205; YES), the processor 153 lowers the output of the radio tag communication device 154, returns to the process of ACT204, and repeatedly executes the process.

If the detection of the radio tag T fails in the radio tag communication device 154 (ACT205; NO), the processor 153 determines whether the transmission output of the radio tag communication device 154 is less than the predetermined maximum output (ACT207). If the transmission output of the radio tag communication device 154 is equal to or greater than the maximum output (ACT207; NO), the processor 153 outputs a message indicating that the calibration process fails, and ends the calibration process (ACT210).

If the transmission output of the radio tag communication device 154 is less than the maximum output (ACT207; YES), the processor 153 sets a transmission output for radio tag detection (ACT208). The transmission output is obtained by adding a predetermined margin to a value of the output setting at the time point of the transmission. Then, the processor 153 outputs a message indicating that the calibration process is successfully executed, and ends the calibration process (ACT209).

The radio tag setting (parameter setting) is performed based on the radio tag setting information transmitted from the server 400. Even in such a case, the radio tag communication device 154 may fail to write the data to the radio tag T, and a void image may be formed a predetermined number of times in succession (for example, data writing may fail for three sheets in succession). Then, the processor 153 may execute the calibration process according to the related art illustrated in FIG. 11.

In the image forming apparatus 100 configured as described above, it is possible to more easily set appropriate parameters in the radio tag communication device 154 that communicates with the radio tag T attached to the radio tag sheet S to be subjected to image formation. A specific description will be described below.

In the image forming apparatus 100, appropriate parameters are set in the radio tag communication device 154. The appropriate parameters are not set individually through the calibration process according to the related art. However, the parameters are set by the image forming apparatus 100 acquiring the radio tag setting information recorded in the external device. Such radio tag setting information may be downloaded (received) from the server 400. The information may be read by connecting the external storage device 500 (for example, a USB memory) to the image forming apparatus 100. The information may be input to the image forming apparatus 100 in other manners. In such a manner, the image forming apparatus 100 is able to easily acquire the radio tag setting information including the appropriate parameters.

In the image forming apparatus 100, it is necessary to acquire the radio tag setting information suitable for the type of radio tag T to be used. Accordingly, the radio tag T is brought close to the radio tag communication device 154 from outside the image forming apparatus 100, and type information indicating the type of the radio tag T is read. The image forming apparatus 100 acquires the radio tag setting information corresponding to the read type information, from the server 400 or the like. In such a manner, the image forming apparatus 100 is able to easily acquire the radio tag setting information suitable for the type of radio tag T to be used.

The image forming apparatus 100 stores the acquired radio tag setting information in association with the sheet feeding source (sheet feeding cassettes 141-1 to 141-4 or manual feeding tray 220), on which the radio tag sheet S, having the radio tag T corresponding to the information is attached is placed on the sheet feeding source. When feeding the sheet, the image forming apparatus 100 sets the parameters of the radio tag setting information corresponding to the sheet feeding source to be used, in the radio tag communication device 154. In such a manner, the image forming apparatus 100 is able to reliably set the parameters, which are suitable for the radio tag T attached to the radio tag sheet S to be fed, in the radio tag communication device 154.

According to the above-mentioned embodiment, the image forming apparatus includes the conveying unit, the tag communication unit, and the control unit. For example, the image forming apparatus is the image forming apparatus 100 in the embodiment, the conveying unit is the conveyance path 250 in the embodiment, the tag communication unit is the radio tag communication device 154 in the embodiment, and the control unit is the processor 153 in the embodiment. The conveying unit conveys a sheet. For example, the sheet is the radio tag sheet S in the embodiment. The tag communication unit performs a first communication with the radio tag brought close to a reading position different from the conveying unit and a second communication with the radio tag provided on the sheet being conveyed by the conveying unit. For example, the reading position different from the conveying unit is the position on the rear side of the radio tag communication device 154 in the embodiment, and the radio tag is the radio tag T in the embodiment. The control unit acquires setting information used in the second communication pre-associated with information that is read in the first communication and causes the tag communication unit to perform the second communication in accordance with the acquired setting information. For example, the information read in the first communication is type information of the radio tag T in the embodiment, and the setting information is the radio tag setting information in the embodiment.

In the above-mentioned image forming apparatus, the setting information may include at least one information of the transmission output and the polarized-wave direction of the antenna that the tag communication unit uses to communicate with the radio tag.

In the above-mentioned image forming apparatus, the control unit may acquire the setting information associated with the radio tag communicating in the first communication, from the external device connected to the network. For example, the network is the network 90 in the embodiment, and the external device is the server 400 or the external storage device 500 in the embodiment.

In the above-mentioned image forming apparatus, the information that is read in the first communication may include type information indicating a type of the radio tag.

The above-mentioned image forming apparatus may further include at least one sheet feeding unit. For example, the sheet feeding units are the sheet feeding cassettes 141-1 to 141-4 and the manual feeding tray 220 in the embodiment. The control unit may cause the storage unit to store the setting information and information indicating the sheet feeding unit as the sheet feeding source of the sheet in association with each other, and may cause the tag communication unit to perform the second communication in accordance with the setting information associated with the sheet feeding unit that feeds the sheet when the sheet is fed. For example, the storage unit is the auxiliary storage device 151 or the memory 152 in the embodiment.

A computer may implement at least a part of the functions of the above-mentioned image forming apparatus 100 in the above-mentioned embodiment. In such a case, a program for implementing the functions may be recorded in a computer-readable recording medium, and the program recorded in the recording medium may be read into a computer system and executed to implement the functions. The term "computer system" described herein includes hardware such as an OS and peripheral devices. The term "computer-readable recording medium" refers to portable media such as flexible disks, optical magnetic disks, ROMs, and CD-ROMs, and storage devices such as hard disks built into the computer system. The term "computer-readable recording medium" may be defined to include a medium that dynamically holds a program for a short period of time. The medium may be, for example, a communication line used when a program is transmitted via a network such as the Internet or a communication line such as a telephone line. In addition, the term may be defined to include a medium that holds a program for a certain period of time. The medium may be, for example, a volatile memory inside a computer system that is a server or client in the above-mentioned case. The above-mentioned program may be a program for implementing a part of the above-mentioned functions. Alternatively, the program may be a program that is able to implement the above-mentioned functions in combination with a program already recorded in the computer system.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims are intended to cover such forms or modifications as would fall within the scope of the inventions.

Hereinafter, supplementary notes related to the above-mentioned embodiments are disclosed.

### Supplementary Note 1

An image forming apparatus including:
a conveying unit configured to convey a sheet;
a tag communication unit configured to perform a first communication with a radio tag brought close to a reading position different from the conveying unit and a second communication with the radio tag provided on the sheet being conveyed by the conveying unit; and
a control unit configured to acquire setting information used in the second communication pre-associated with information that is read in the first communication and cause the tag communication unit to perform the second communication in accordance with the acquired setting information.

### Supplementary Note 2

The image forming apparatus according to Supplementary Note 1, in which the setting information includes at least one information of a transmission output and a polarized-wave direction of an antenna that the tag communication unit uses to communicate with the radio tag.

### Supplementary Note 3

The image forming apparatus according to Supplementary Note 1, in which the control unit acquires the setting information associated with the radio tag communicating in the first communication, from an external device connected to a network.

### Supplementary Note 4

The image forming apparatus according to Supplementary Note 1, in which the information that is read in the first communication includes type information indicating a type of the radio tag.

### Supplementary Note 5

The image forming apparatus according to Supplementary Note 1, further including at least one sheet feeding unit,
in which the control unit causes a storage unit to store the setting information and information indicating the sheet feeding unit as a sheet feeding source of the sheet in association with each other, and causes the tag communication unit to perform the second communication in accordance with the setting information associated with the sheet feeding unit that feeds the sheet when the sheet is fed.

### Supplementary Note 6

The image forming apparatus according to Supplementary Note 5, further including a selection unit that allows a user to select the sheet feeding unit that feeds the sheet,
in which the control unit associates the setting information with the sheet feeding unit selected by the selection unit.

### Supplementary Note 7

The image forming apparatus according to Supplementary Note 5, in which the control unit associates the setting information with the sheet feeding unit that is most recently opened and closed.

### Supplementary Note 8

The image forming apparatus according to Supplementary Note 5, in which the control unit disables use of the sheet feeding unit with which the setting information is not associated.

### Supplementary Note 9

The image forming apparatus according to Supplementary Note 1, in which the control unit executes a predetermined calibration process when the setting information cannot be acquired.

### Supplementary Note 10

The image forming apparatus according to Supplementary Note 1, in which the control unit executes a predetermined calibration process when the second communication, which the control unit causes the tag communication unit to perform in accordance with the setting information, fails a predetermined number of times in succession.

### Supplementary Note 11

The image forming apparatus according to Supplementary Note 1, in which the reading position in the first communication is a position outside the image forming apparatus and on the rear side of the tag communication unit.

### Supplementary Note 12

An image forming system having an image forming apparatus and a radio tag communication device,
in which the image forming apparatus includes:
   a conveying unit configured to convey a sheet; and
   a control unit configured to acquire setting information used in a second communication pre-associated with information that is read in a first communication and cause a tag communication unit to perform the second communication in accordance with the acquired setting information, and
in which the radio tag communication device includes
   the tag communication unit configured to perform the first communication with a radio tag brought close to a reading position different from the conveying unit and the second communication with the radio tag provided on the sheet being conveyed by the conveying unit.

### Supplementary Note 13

A method of setting communication through a computer of an image forming apparatus, the method including:
a step of performing a first communication with a radio tag brought close to a reading position different from a conveying unit that conveys a sheet, through a tag communication unit;
a step of performing a second communication with the radio tag provided on the sheet being conveyed by the conveying unit, through the tag communication unit; and
a step of acquiring setting information used in the second communication pre-associated with information that is read in the first communication and causing the tag communication unit to perform the second communication in accordance with the acquired setting information, through a control unit.

### Supplementary Note 14

A program for causing a computer of an image forming apparatus to execute:
a step of performing a first communication with a radio tag brought close to a reading position different from a conveying unit that conveys a sheet, through a tag communication unit;
a step of performing a second communication with the radio tag provided on the sheet being conveyed by the conveying unit, through the tag communication unit; and
a step of acquiring setting information used in the second communication pre-associated with information that is read in the first communication and causing the tag communication unit to perform the second communication in accordance with the acquired setting information, through a control unit.

## Claims

1. An image forming apparatus comprising:
a conveying unit (250) configured to convey a sheet;
a tag communication unit (154) configured to perform a first communication with a radio tag brought close to a reading position different from the conveying unit and a second communication with the radio tag provided on the sheet being conveyed by the conveying unit; and
a control unit (153) configured to acquire setting information used in the second communication pre-associated with information that is read in the first communication and cause the tag communication unit to perform the second communication in accordance with the acquired setting information.

2. The apparatus according to claim 1, wherein the setting information includes at least one information of a transmission output and a polarized-wave direction of an antenna that the tag communication unit uses to communicate with the radio tag.

3. The apparatus according to claim 1 or 2, wherein the control unit acquires the setting information associated with the radio tag communicating in the first communication, from an external device connected to a network.

4. The apparatus according to any one of claims 1 to 3, wherein the information that is read in the first communication includes type information indicating a type of the radio tag.

5. The apparatus according to any one of claims 1 to 4, further comprising at least one sheet feeding unit.

6. The apparatus according to claim 5,wherein the control unit causes a storage unit to store the setting information and information indicating the sheet feeding unit as a sheet feeding source of the sheet in association with each other, and causes the tag communication unit to perform the second communication in accordance with the setting information associated with the sheet feeding unit that feeds the sheet when the sheet is fed.

7. The apparatus according to claim 5 or 6, further comprising a selection unit that allows a user to select the sheet feeding unit that feeds the sheet, wherein the control unit associates the setting information with the sheet feeding unit selected by the selection unit.

8. The apparatus according to any one of claims 5 to 7, wherein the control unit associates the setting information with the sheet feeding unit that is most recently opened and closed.

9. The apparatus according to any one of claims 5 to 8, wherein the control unit disables use of the sheet feeding unit with which the setting information is not associated.

10. The apparatus according to any one of claims 1 to 9, wherein the control unit executes a predetermined calibration process when the setting information cannot be acquired.

11. The apparatus according to any one of claims 1 to 10, wherein the control unit executes a predetermined calibration process when the second communication, which the control unit causes the tag communication unit to perform in accordance with the setting information, fails a predetermined number of times in succession.

12. The apparatus according to any one of claims 1 to 11, wherein the reading position in the first communication is a position outside the image forming apparatus and on the rear side of the tag communication unit.

13. An image forming system having an image forming apparatus and a radio tag communication device,
in which the image forming apparatus includes:
a conveying unit configured to convey a sheet; and
a control unit configured to acquire setting information used in a second communication pre-associated with information that is read in a first communication and cause a tag communication unit to perform the second communication in accordance with the acquired setting information, and
in which the radio tag communication device includes
the tag communication unit configured to perform the first communication with a radio tag brought close to a reading position different from the conveying unit and the second communication with the radio tag provided on the sheet being conveyed by the conveying unit.

14. A method of setting communication through a computer of an image forming apparatus, the method including:
a step of performing a first communication with a radio tag brought close to a reading position different from a conveying unit that conveys a sheet, through a tag communication unit;
a step of performing a second communication with the radio tag provided on the sheet being conveyed by the conveying unit, through the tag communication unit; and
a step of acquiring setting information used in the second communication pre-associated with information that is read in the first communication and causing the tag communication unit to perform the second communication in accordance with the acquired setting information, through a control unit.

15. A program comprising instructions for causing a computer of an image forming apparatus to perform the method of claim 14.
